# EUROPÄISCHE PATENTANMELDUNG

(11) **EP 1 870 153 A1**
(43) Veröffentlichungstag der Anmeldung: **26.12.2007**
(21) Anmeldenummer: 07012319.5
(22) Anmeldetag: 23.06.2007
(51) Int. Cl.: B01D 46/28, B01D 46/00

(54) **Filteranordnung zur Trockenabscheidung**

(30) Priorität: 24.06.2006 DE 102006029058
(71) Anmelder: Rippert Besitzgesellschaft mbH & Co. KG, 33442 Herzebrock-Clarholz (DE)
(72) Erfinder: Schöning, Thomas, 33442 Herzebrock-Clarholz (DE)
(74) Vertreter: Elbertzhagen, Otto

(57) **Zusammenfassung**

Eine Filteranordnung zur Trockenabscheidung weist einen Feinabscheider (1) auf, in dessen Einlaßzone (2) ein Vorabscheider zur Trockenabscheidung von klebenden Partikeln aus einem Gasstrom angeordnet ist. Der Vorabscheider ist mit einem Filter versehen, welches sich in der Einlaßzone (2) des Feinabscheiders (1) entlang einer quer zur Gasströmungsrichtung stehenden Ebene erstreckt. Um während des Betriebs oder in einer kurzen Betriebsunterbrechung das Filter des Vorabscheiders zumindest in einem Teilbereich austauschen zu können, besteht das Filter aus zumindest zwei Filtereinheiten (3), die einander abwechselnd in die Einlaßzone hinein bzw. aus dieser heraus beweglich angeordnet sind.

## Beschreibung

Die Erfindung bezieht sich auf eine Filteranordnung mit einem Feinabscheider und einem Vorabscheider gemäß den Merkmalen des Oberbegriffs des Patentanspruchs 1.

Eine solche Filteranordnung ist aus dem Dokument EP 0 875 275 B1 bekannt. Das dort vorhandene Filtermedium zur Trockenabscheidung im Vorabscheider besteht aus rotierenden Bürstenwalzen, die in einer Reihe so nebeneinander angeordnet sind, daß die Rotationsachsen der Bürstenwalzen parallel miteinander in einer gemeinsamen Ebene liegen, die quer zur Gasströmungsrichtung steht.

Das Problem solcher Vorabscheider zur Trockenabscheidung liegt in der zunehmenden Erschöpfung der Filterfunktion während der Betriebsdauer. Zwar kann man im Bereich der vorerwähnten, rotierenden Bürstenwalzen Abstreifvorrichtungen zur Abreinigung der Borsten an den Bürstenwalzen vorsehen, bei anderen Filtermedien ist dies jedoch nicht möglich.

Der Erfindung liegt deshalb die Aufgabe zugrunde, eine Filteranordnung der vorgenannten Art zu schaffen, bei der während des Betriebs oder in einer kurzen Betriebsunterbrechung das Filter des Vorabscheiders in einfacher Weise zumindest in einem Teilbereich ausgetauscht werden kann.

Diese Aufgabe wird bei einer Filteranordnung der eingangs genannten Art durch die kennzeichnenden Merkmale des Patentanspruchs 1 gelöst.

Für die Erfindung ist wesentlich, daß die Filtereinheiten des Vorabscheiders entweder einander abwechseln oder sich bereichsweise erneuern, ohne in der Einlaßzone des Feinabscheiders eine aufwendige Umrüstung vornehmen zu müssen. So schiebt man quer zur Gasströmungsrichtung das auszuwechselnde Filter aus der Einlaßzone des Feinabscheiders heraus und fährt ebenso quer zur Gasströmungsrichtung ein weiter vorhandenes Filter in die Einlaßzone des Feinabscheiders hinein. Ebenso kann sich das Filtermedium des Vorabscheiders in einem kontinuierlichen oder diskontinuierlichen Umlauf befinden und sich infolgedessen im Bereich der Einlaßzone des Feinabscheiders zumindest bereichsweise erneuern. Dies geschieht, indem das Filtermedium im Umlauf außerhalb des Einlaßbereichs des Vorabscheiders abschnittsweise gereinigt und im gereinigten Zustand wieder in diese Einlaßzone hineingefahren wird. Die Erfindung ermöglicht es, die Betriebszeiten von Lackieranlagen zu verlängern,was vor allem für den Zwei- oder Dreischicht-Betrieb von erheblichem Vorteil ist.

Man erreicht diesen Vorteil bereits, wenn man lediglich zwei Filtereinheiten für den Vorabscheider vorsieht, die in einer gemeinsamen oder in miteinander parallelen Ebenen angeordnet sind. Die Filtereinheiten können gleiche oder auch unterschiedliche Filtermedien aufweisen, so daß auch unterschiedlichen Anforderungen bei der Trockenabscheidung entsprochen werden kann. In einer bevorzugten Ausführungsform besteht das Filtermedium zumindest einer der Filtereinheiten des Vorabscheiders aus rotierenden Bürstenwalzen, die im Bereich der Einlaßzone des Feinabscheiders lückenlos aneinander angrenzen. Insbesondere diese Bürstenwalzen bieten sich dafür an, sie im Umlauf abzureinigen, indem sie hierzu aus der Einlaßzone des Feinabscheiders herausgefahren und nach der Abreinigung wieder in diese Einlaßzone eingefahren werden.

Die Erfindung wird nachfolgend anhand der Zeichnung noch näher erläutert. Darin zeigen:
- Fig. 1: eine schematische Draufsicht auf eine Filteranordnung in erster Ausführung,
- Fig. 2: eine schematische Draufsicht auf eine Filteranordnung in zweiter Ausführung in erster Betriebsposition,
- Fig. 3: eine schematische Draufsicht auf die Filteranordnung nach Figur 2 in zweiter Betriebsposition und
- Fig. 4: eine schematische Draufsicht auf eine Filteranordnung in dritter Ausführung.

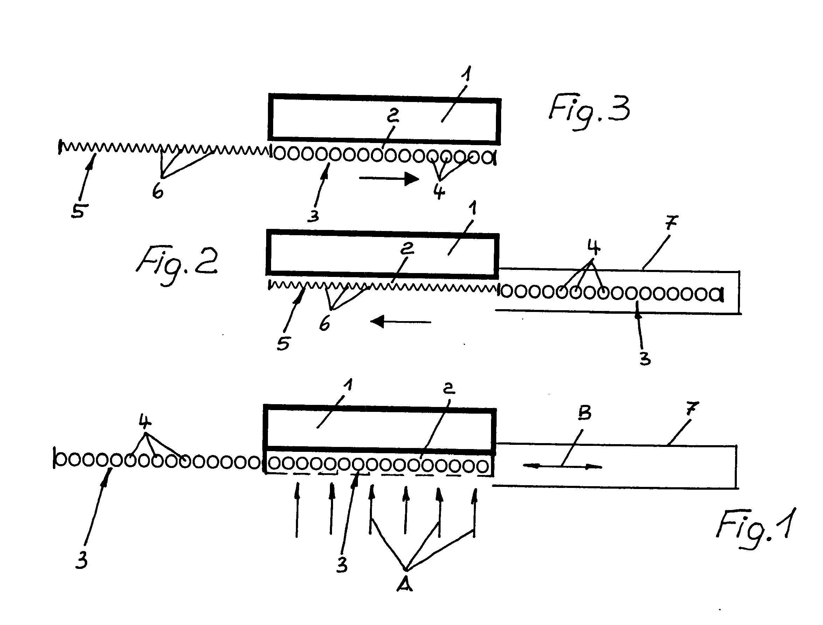

Figur 1 zeigt im einzelnen in schematischer Wiedergabe einen Feinabscheider 1 mit einer Einlaß- oder Unterdruckzone 2, in der sich ein sogenannter Vorabscheider befindet, der für die Trockenabscheidung vorgesehen ist. Der Vorabscheider besteht aus einem Filter, welches zwei gleiche Filtereinheiten 3 aufweist. Die beiden Filtereinheiten 3 sind mit einem Filtermedium 4 ausgestattet, welches durch rotierende Bürstenwalzen gebildet ist.

Diese Bürstenwalzen haben eine zylindrische Form und sind mit aufrechtstehenden Rotationsachsen in einem nicht näher dargestellten, sich in einer Ebene erstrekkenden Bereich eines Gestells gelagert. Die Bürstenwalzen tangieren einander am Umfang und bilden so das für den zu reinigenden Luftstrom durchgängige Filtermedium 4, an dessen Borsten sich die abzuscheidenden Partikel ablagern.

Die beiden Filtereinheiten 3 sind in einer gemeinsamen Ebene angeordnet, in der sie verfahrbar sind. So können die beiden Filtereinheiten 3 einander abwechselnd in die Einlaßzone 2 des Feinabscheiders 1 eingeschoben bzw. daraus herausgeschoben werden, wobei sie in der Einlaßzone 2 sich quer zur Gasströmungsrichtung erstrecken, welche in Fig. 1 mittels der Pfeile A angedeutet ist. Dementsprechend übernimmt jeweils die Filtereinheit 3, die sich innerhalb der Einlaßzone 2 des Feinabscheiders 1 befindet, die Funktion des Vorabscheiders, während die zweite Filtereinheit 3 abgereinigt werden kann.

Die Verschieberichtung der beiden Filtereinheiten 3 ist in Figur 1 durch den Pfeil B angegeben. Die jeweils nicht im Abscheidebetrieb befindliche Filtereinheit 3 wird in eine Umrüst- oder Abreinigungsstation 7 eingefahren, um sie dort nach Erschöpfung ihrer Filterfunktion wieder aufzubereiten.

Grundsätzlich können auch Filter verwendet werden, die aus flächigen, ebenen Filtereinheiten 5 bestehen, wie sie in den Figuren 2 und 3 angedeutet sind. Bei diesen Filtereinheiten kann es sich um solche handeln, deren Filtermedium 6 aus einem Vlies- oder Fasermaterial oder aus einem Papiermaterial besteht. Weiter verdeutlichen die Figuren 2 und 3, daß unterschiedliche Filtereinheiten 3 und 5 zum Einsatz kommen können, um in einander abwechselnder Anordnung in der Einlaßzone 2 des Feinabscheiders 1 mit unterschiedlichen Abscheiderfunktionen arbeiten zu können.

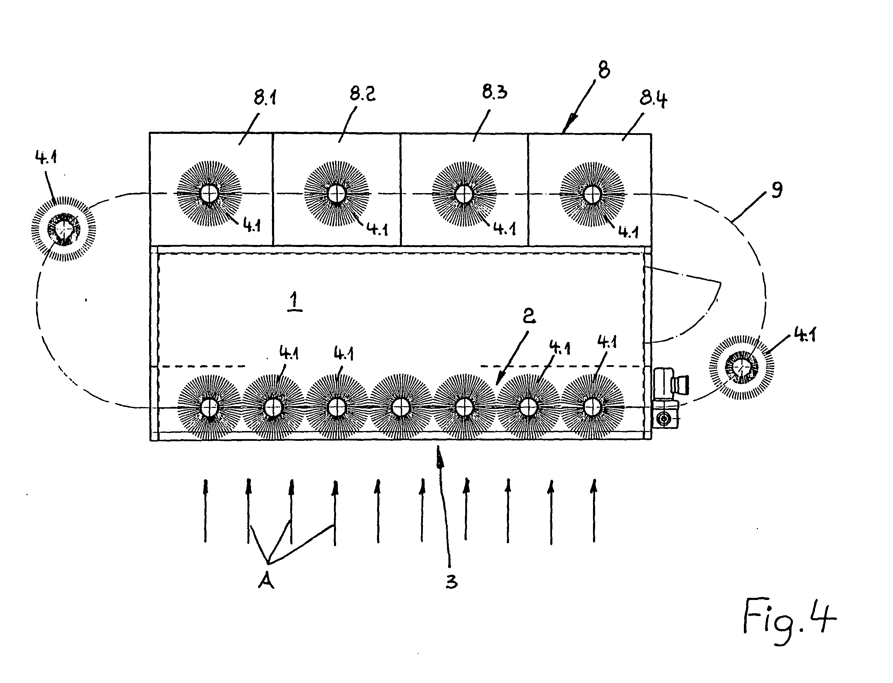

Fig. 4 veranschaulicht in detaillierterer Form die vorstehend erwähnten Bürstenwalzen, die in Fig. 1 mit der Bezugsziffer 4.1 versehen sind. Allerdings sind diejenigen Bürstenwalzen 4.1, welche hier in der Gesamtheit die Filtereinheit 3 bilden, nicht in einem einzigen Arbeitsspiel aus der Einlaßzone 2 des Feinabscheiders 1 heraus verschiebbar, vielmehr sind die Bürstenwalzen 4.1 einzeln oder in Gruppen entlang einer horizontal sich erstreckenden Umlaufbahn 9 verfahrbar. Im Bereich der Einlaßzone 2 tangieren die zylindrischen, mit ihrer Rotationsachse aufrecht angeordneten Bürstenwalzen 4.1 am Umfang einander oder überlappen sich sogar, um im Bereich des durchtretenden Gasstroms A eine lückenlose Filtereinheit 3 zu ergeben. Im kontinuierlichen oder diskontinuierlichen Umlauf entlang der Umlaufbahn 9 werden die Bürstenwalzen 4.1 oder -gruppen vereinzelt, um nacheinander Aufbereitungsstationen 8.1 - 8.4 einer Abreinigungsanlage 8 zu durchlaufen, durch die hindurch sich die Umlaufbahn 9 ebenso wie durch die Einlaßzone 2 hindurch erstreckt. In den Abreinigungsstationen 8.1 - 8.4 werden die Bürstenwalzen 4.1 mittels unterschiedlicher Methoden gereinigt, insbesondere gewaschen, danach getrocknet und ggf. anschließend einer weiteren Aufbereitung unterzogen, wonach sie ihren Umlauf durch die Einlaßzone 2 des Feinabscheiders 1 fortsetzen.

## Patentansprüche

1. Filteranordnung mit einem einem Feinabscheider in dessen Einlaßzone vorgeordneten Vorabscheider zur Trockenabscheidung von klebenden Partikeln, insbesondere von Farbpartikeln, aus einem Gasstrom, wie einem Luftstrom, wobei der Vorabscheider ein Filter aufweist, welches sich in der Einlaßzone entlang einer quer zur Gasströmungsrichtung stehenden Ebene erstreckt,
**dadurch gekennzeichnet,**
**daß** das Filter aus zumindest zwei Filtereinheiten (3; 3, 5) besteht, die einander abwechselnd in die Einlaßzone (2) hinein bzw. aus der E inlaßzone (2) heraus beweglich angeordnet sind.

2. Filteranordnung nach Anspruch 1,
**dadurch gekennzeichnet,**
**daß** die Filtereinheiten (3, 5) ebene Gebilde sind, die in Richtung ihrer Ebenen verfahrbar sind.

3. Filteranordnung nach Anspruch 2,
**dadurch gekennzeichnet,**
**daß** die Filtereinheiten (3; 3, 5) nebeneinander in einer gemeinsamen Ebene quer zur Gasströmungsrichtung angeordnet sind.

4. Filteranordnung nach Anspruch 2,
**dadurch gekennzeichnet,**
**daß** die Filtereinheiten (3; 3,5) in miteinander parallelen Ebenen jeweils quer zur Gasströmungsrichtung angeordnet sind.

5. Filteranordnung nach einem der Ansprüche 1 - 4,
**dadurch gekennzeichnet,**
**daß** die Filtereinheiten (3, 5) gleich sind und dementsprechend gleiche Filtermedien (4, 6) aufweisen.

6. Filteranordnung nach einem der Ansprüche 1 - 4,
**dadurch gekennzeichnet,**
**daß** die Filtereinheiten (3, 5) unterschiedlich sind und dementsprechend mit unterschiedlichen Filtermedien (4, 6) ausgestattet sind.

7. Filteranordnung nach einem der Ansprüche 1 - 6,
**dadurch gekennzeichnet,**
**daß** zumindest eines der Filtermedien (4, 6) der Filtereinheiten (3, 5) aus einem Vlies- oder Fasermaterial besteht.

8. Filteranordnung nach einem der Ansprüche 1 - 6,
**dadurch gekennzeichnet,**
**daß** zumindest eines der Filtermedien (4, 6) der Filtereinheiten (3, 5) aus einem Papiermaterial besteht.

9. Filteranordnung nach einem der Ansprüche 1 - 6,
**dadurch gekennzeichnet,**
**daß** zumindest eines der Filtermedien (4, 6) durch eine Mehrzahl von rotierenden, lückenlos nebeneinander angeordneten Bürstenwalzen gebildet ist.

10. Filteranordnung nach Anspruch 9,
**dadurch gekennzeichnet,**
**daß** das durch die Bürstenwalzen gebildete Filtermedium (4) ein in einer Ebene sich erstreckendes Gestell aufweist, in welchem die Bürstenwalzen mit vertikaler Ausrichtung ihrer Rotationsachsen gelagert sind.

11. Filteranordnung nach einem der Ansprüche 1 und 3 - 10,
**dadurch gekennzeichnet,**
**daß** die Filtereinheiten (3, 5) entlang einer horizontal sich erstreckenden Umlaufbahn (9) geführt sind und neben oder hinter der Einlaßzone (2) des Feinabscheiders (1) eine von den Filtereinheiten (3, 5) durchlaufene Abreinigungsstation (8) vorgesehen ist.

12. Filteranordnung nach Anspruch 9 und 11,
**dadurch gekennzeichnet,**
**daß** die das Filtermedium (4) bildenden Bürstenwalzen (4.1) mit vertikal ausgerichteten Rotationsachsen entlang der horizontalen Umlaufbahn (9) geführt sind, wobei die Bürstenwalzen (4.1) in der Einlaßzone (2) des Feinabscheiders (1) zur Bildung der Filtereinheit (3) lückenlos aneinander angrenzen und im weiteren Umlauf in vereinzelter Anordnung die Abreinigungsstation (8) durchlaufen.

13. Filteranordnung nach Anspruch 12,
**dadurch gekennzeichnet,**
**daß** die Abreinigungsstation (8) mit Abstand parallel zur Durchlaßzone (2) angeordnet ist.
